(19) Europäisches Patentamt
European Patent Office
Office européen des brevets

(11) EP 2 893 972 A1

(12) EUROPEAN PATENT APPLICATION
published in accordance with Art. 153(4) EPC

(43) Date of publication:
15.07.2015 Bulletin 2015/29

(51) Int Cl.:
$B01D\ 71/02^{(2006.01)}$    $C01B\ 13/02^{(2006.01)}$
$C01G\ 37/14^{(2006.01)}$    $H01M\ 8/06^{(2006.01)}$

(21) Application number: 13834541.8

(22) Date of filing: 03.09.2013

(86) International application number:
PCT/JP2013/005212

(87) International publication number:
WO 2014/038186 (13.03.2014 Gazette 2014/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 05.09.2012  JP 2012195247

(71) Applicant: NGK Sparkplug Co., Ltd.
Nagoya-shi, Aichi 467-8525 (JP)

(72) Inventors:
• WATANABE, Shuntaro
Nagoya-shi
Aichi 467-8525 (JP)

• KONDO, Tomonori
Nagoya-shi
Aichi 467-8525 (JP)
• SUGAYA, Satoshi
Nagoya-shi
Aichi 467-8525 (JP)

(74) Representative: Zimmermann & Partner
Patentanwälte mbB
Postfach 330 920
80069 München (DE)

(54) OXYGEN-PERMEABLE FILM

(57) An oxygen-permeable film through which oxygen permeates from a high oxygen partial pressure side of the film to a low oxygen partial pressure side of the film by means of an oxygen partial pressure difference serving as a driving force, the oxygen-permeable film being characterized by including a mixture of stabilized zirconia serving as an oxygen ion conductor, and an electron conductor represented by a compositional formula of $La_{1-x}M_xCrO_{3-z}$ (wherein M is an element selected from among alkaline earth metals other than magnesium (Mg), and x satisfies a relation of $0 \leq x \leq 0.3$).

FIG. 1

**EP 2 893 972 A1**

**Description**

CROSS REFERENCE TO RELATED APPLICATIONS

This application claims priority to Japanese Patent Application No. 2012-195247 filed September 5, 2012, which is incorporated herein by reference in its entirety.

TECHNICAL FIELD

The present invention relates to an oxygen-permeable film through which oxygen selectively permeates.

BACKGROUND ART

Currently known oxygen-permeable films through which oxygen selectively permeates include an oxygen-permeable film formed of a mixture of an oxide exhibiting oxygen ion (oxide ion) conductivity (e.g., a solid solution of ceria containing gadolinium) and an oxide exhibiting electron conductivity (e.g., a spinel composite oxide containing iron). As has been known, such an oxygen-permeable film is employed for producing oxygen required for a reforming reaction which produces hydrogen from a reforming raw material (see, for example, Patent Document 1). This conventional technique discloses a method in which oxygen is extracted from air by means of an oxygen-permeable film, and a reforming raw material (e.g., a hydrocarbon fuel) is reformed through partial oxidation reaction by use of the resultant oxygen, to thereby produce hydrogen which is supplied to, for example, a fuel cell.

PRIOR ART DOCUMENT

PATENT DOCUMENT

Patent Document 1: Japanese Patent Application Laid-Open (*kokai*) No. 2005-281086
Patent Document 2: Japanese Patent Application Laid-Open (*kokai*) No. H05-238738

SUMMARY OF THE INVENTION

PROBLEMS TO BE SOLVED BY THE INVENTION

However, as has been known, when such an oxygen-permeable film is produced through firing of a mixture of raw materials (i.e., an oxide exhibiting oxygen ion conductivity and an oxide exhibiting electron conductivity), the two oxides react with each other, to thereby generate a heterogeneous phase, which has a composition different from that of these oxides. Such a heterogeneous phase generally has a high resistance, and generation of the heterogeneous phase may cause deterioration of the performance of the oxygen-permeable film. Therefore, demand has arisen for an oxygen-permeable film which exhibits excellent oxygen permeability and in which oxides forming the oxygen-permeable film exhibit excellent stability.
The oxides forming the oxygen-permeable film may raise a problem in terms of stability not only during production of the oxygen-permeable film, but also during oxygen permeation by means of the oxygen-permeable film. For example, when the oxygen-permeable film is employed in a reformer for carrying out partial oxidation reaction, the oxygen-permeable film is exposed not only to a reforming raw material (i.e., a reducing material), but also to a high temperature corresponding to the partial oxidation reaction temperature. That is, the oxygen-permeable film is exposed to a high-temperature reducing atmosphere. In such a case, the oxides forming the oxygen-permeable film may react with each other, or the oxides forming the oxygen-permeable film may be reduced, resulting in deterioration of the performance of the oxygen-permeable film. Thus, demand has arisen for a technique for improving the stability of the oxygen-permeable film, or a technique for securing the performance of the oxygen-permeable film. Also, demand has arisen for, for example, an oxygen-permeable film exhibiting improved performance, reduction in oxygen-permeable film production cost, or simplification of an oxygen-permeable film production process.

MEANS FOR SOLVING THE PROBLEMS

The present invention has been accomplished for solving the aforementioned problems, and the invention may be implemented in the following forms.

(1) In one mode of the present invention, there is provided an oxygen-permeable film through which oxygen permeates from a high oxygen partial pressure side of the film to a low oxygen partial pressure side of the film by means of an oxygen partial pressure difference serving as a driving force. The oxygen-permeable film is characterized by comprising a mixture of stabilized zirconia serving as an oxygen ion conductor, and an electron conductor represented by a compositional formula of $La_{1-x}M_xCrO_{3-z}$ (wherein M is an element selected from among alkaline earth metals other than magnesium (Mg), and x satisfies a relation of $0 \leq x \leq 0.3$). According to this mode, the stability of the oxides forming the oxygen-permeable film can be improved, and the oxygen permeability of the oxygen-permeable film can also be improved.

(2) In the oxygen-permeable film of the aforementioned mode, M of the compositional formula may be calcium (Ca) or strontium (Sr), and x of the compositional formula may satisfy a relation of $0.15 \leq x \leq 0.25$. In this case, the stability and oxygen permeability of the oxygen-permeable film can be further improved.

(3) In the oxygen-permeable film of the aforementioned mode, x may be 0.2. In this case, the stability and oxygen permeability of the oxygen-permeable film can be further improved. Particularly when M is strontium (Sr), M of the compositional formula can be prevented from forming a solid solution in zirconia. Thus, the stability and oxygen permeability of the oxygen-permeable film can be further improved.

(4) In the oxygen-permeable film of the aforementioned mode, M of the compositional formula may be calcium (Ca). In this case, the relative density of the oxygen-permeable film can be increased, and the oxygen permeation rate thereof can be increased.

(5) The oxygen-permeable film of the aforementioned mode may generate substantially no heterogeneous phase after the oxygen-permeable film has been exposed to an atmosphere of 10% hydrogen and 90% nitrogen at 1,000°C for 24 hours. In this case, even when the oxygen-permeable film is employed in a reducing atmosphere, the stability and oxygen permeability of the oxygen-permeable film can be maintained.

(6) The oxygen-permeable film of the aforementioned mode may have a relative density of 80% or more. In this case, the oxygen permeation rate of the oxygen-permeable film can be increased.

(7) The oxygen-permeable film of the aforementioned mode may have a relative density of 90% or more. In this case, the oxygen permeation rate of the oxygen-permeable film can be further increased, and the performance of the oxygen-permeable film can be improved.

(8) In the oxygen-permeable film of the aforementioned mode, x of the compositional formula may satisfy a relation of $0 \leq x \leq 0.2$. In this case, generation of a heterogeneous phase can be further suppressed in the oxygen-permeable film, and the stability of the oxygen-permeable film can be improved.

(9) The oxygen-permeable film of the aforementioned mode may be produced through firing of a mixture of the oxygen ion conductor and the electron conductor. Even when the oxygen-permeable film is produced through firing of the mixture, since reaction between the oxygen ion conductor and the electron conductor can be prevented, the oxygen permeability of the oxygen-permeable film can be improved.

The present invention may be implemented in various forms other than those described above. For example, the present invention may be implemented as an oxygen-permeable film production method or a reformer including an oxygen-permeable film.

BRIEF DESCRIPTION OF THE DRAWINGS

[FIG. 1] FIG. 1     is a schematic cross-sectional view of the configurations of an oxygen-permeable film and a reformer.
[FIG. 2] FIG. 2     shows the results of evaluation of the stability and reduction resistance of oxygen-permeable films.
[FIG. 3] FIG. 3     shows the results of evaluation of the stability and reduction resistance of oxygen-permeable films.
[FIG. 4] FIG. 4     shows an X-ray diffraction pattern of sample S01.
[FIG. 5] FIG. 5     shows an X-ray diffraction pattern of sample S09.
[FIG. 6] FIG. 6     shows an X-ray diffraction pattern of sample S05.
[FIG. 7] FIG. 7     shows an X-ray diffraction pattern of sample S31.

[FIG. 8] FIG. 8      shows an X-ray diffraction pattern of sample S32.

[FIG. 9] FIG. 9      shows the relationship between the amount of Sr substitution x and integrated intensity ratio.

[FIG. 10] FIG. 10    shows the relationship between the amount of Ca substitution x and integrated intensity ratio.

[FIG. 11] FIG. 11    shows X-ray diffraction patterns of a sample before and after thermal treatment in a reducing atmosphere.

[FIG. 12] FIG. 12    shows X-ray diffraction patterns of a sample before and after thermal treatment in a reducing atmosphere.

[FIG. 13] FIG. 13    shows the relative densities and oxygen permeation flux densities of samples.

[FIG. 14] FIG. 14    shows an apparatus for determining the oxygen permeation flux density of an oxygen-permeable film.

[FIG. 15] FIG. 15    shows the determined oxygen permeation flux densities of samples.

[FIG. 16] FIG. 16    shows the relative densities and oxygen permeation flux densities of samples.

[FIG. 17] FIG. 17    shows the determined oxygen permeation flux densities of samples.

MODES FOR CARRYING OUT THE INVENTION

A. Configuration of oxygen-permeable film:

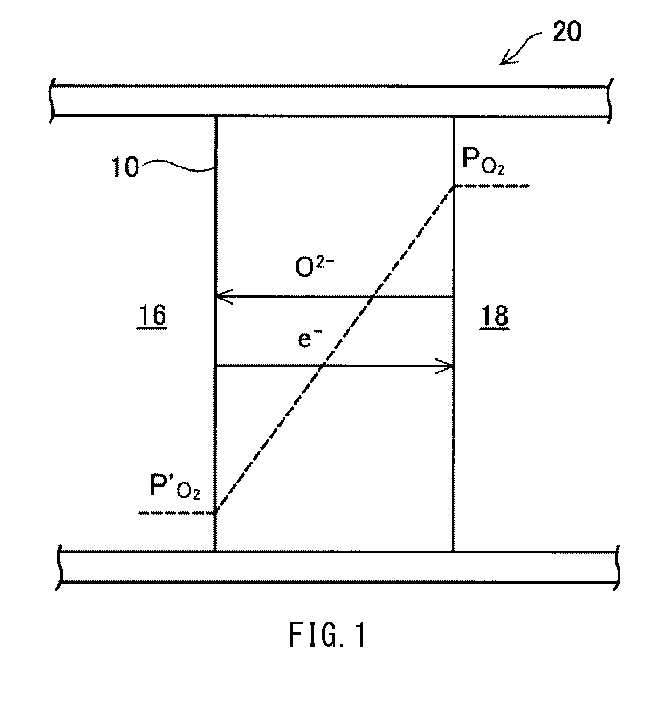

FIG. 1 is a schematic cross-sectional view, and schematically shows the configuration of an oxygen-permeable film 10 according to an embodiment of the present invention, and the configuration of a reformer 20 including the oxygen-permeable film 10. The configuration of the oxygen-permeable film 10 will now be described. The oxygen-permeable film 10 is formed of a mixture of an oxide exhibiting oxygen ion conductivity (hereinafter may be referred to as an "oxygen ion conductor") and an oxide exhibiting electron conductivity (hereinafter may be referred to as an "electron conductor"). Therefore, the oxygen-permeable film 10 exhibits oxygen ion conductivity and electron conductivity in a reducing atmosphere and in an oxidizing atmosphere.

The oxygen ion conductor contained in the oxygen-permeable film 10 may be stabilized zirconia. The stabilized zirconia is zirconia stabilized by forming a solid solution of one or more dopants (i.e., oxides) in zirconium oxide ($ZrO_2$). Examples of the oxide which may be employed as the dopant include rare earth oxides such as yttrium oxide ($Y_2O_3$), scandium oxide ($Sc_2O_3$), and ytterbium oxide ($Yb_2O_3$). Alternatively, calcium oxide (CaO) or magnesium oxide (MgO) may be employed as the dopant. When, in zirconia, the zirconium (Zr) site, which is stable in a tetravalent state, is substituted by an element contained in the dopant, the element being stable in a divalent or trivalent state, oxygen vacancies are provided in the zirconia structure, and the zirconia exhibits oxygen ion conductivity and has a stabilized crystal structure. From the viewpoints of oxygen ion conductivity and stability, the stabilized zirconia is preferably selected from among yttria-stabilized zirconia (hereinafter may be referred to as "YSZ") and scandia-stabilized zirconia (hereinafter may be referred to as "ScSZ").

In the stabilized zirconia, the oxygen ion conductivity is improved by increasing the amount of the dopant added. In general, when the amount of the dopant added is nearly equal to a minimum necessary amount for obtaining completely stabilized zirconia, the oxygen ion conductivity becomes maximum. When the amount of the dopant added exceeds such a necessary level, the oxygen ion conductivity tends to be lowered. Therefore, in order to secure oxygen ion conductivity and to achieve the effect of improving the stability of the entire oxygen-permeable film 10, the amount of the dopant added to the stabilized zirconia is preferably adjusted to 3 to 12 mol%. Particularly, when the stabilized zirconia employed is yttria-stabilized zirconia, the amount of the dopant added is preferably adjusted to 3 to 8 mol%, whereas when the stabilized zirconia employed is scandia-stabilized zirconia, the amount of the dopant added is preferably adjusted to 7 to 11 mol%.

The electron conductor contained in the oxygen-permeable film 10 may be an electron conductor represented by the following formula (1).

$$La_{1-x}M_xCrO_{3-z} \cdots \qquad (1)$$

In formula (1), M is an element selected from among alkaline earth metals other than magnesium (Mg); x satisfies a relation of $0 \leq x \leq 0.3$; and z corresponds to a change in amount of oxygen atoms in association with the proportions of the metal elements shown in the formula, or the environmental temperature or atmosphere.

In the present embodiment, the oxygen-permeable film is produced through mixing of the oxygen ion conductor (i.e., stabilized zirconia) and the electron conductor (i.e., an oxide represented by the aforementioned formula (1)), whereby reaction between the oxygen ion conductor and the electron conductor is suppressed. In the case where the electron conductor is a lanthanum chromite composite oxide, when, as described above, the electron conductor is employed in combination with stabilized zirconia, the stability of the oxygen-permeable film can be improved. Therefore, in the aforementioned formula (1), x may be 0. However, when an element selected from among alkaline earth metals other than magnesium (Mg) is added to the lanthanum (La) site in a lanthanum chromite composite oxide represented by the aforementioned formula (1), the performance of the oxygen-permeable film 10 can be further improved. In such a lanthanum chromite composite oxide, when the La site, which is stable in a trivalent state, is partially substituted by an alkaline earth metal stable in a divalent state (e.g., strontium (Sr)), since the valency of chromium (Cr) is varied, electron conductivity can be improved. However, when the alkaline earth metal employed is magnesium (Mg), the Cr site (rather than the La site) is substituted by magnesium (Mg). Therefore, in the present embodiment, magnesium (Mg) is excluded from alkaline earth metals M shown in formula (1).

In the present embodiment, the electron conductivity of the electron conductor can be improved by increasing the value x in the aforementioned formula (1). However, when the value x is increased (i.e., the amount of substitution is increased), the electron conductor has an unstable crystal structure, and exhibits increased reactivity to another element. Specifically, when the value x exceeds 0.3, for example, an increasing amount of a heterogeneous phase, which has a composition different from that of the electron conductor or the oxygen ion conductor, is generated in a process of firing a mixture of the electron conductor and the oxygen ion conductor for producing the oxygen-permeable film 10 of the present embodiment. Therefore, in the present embodiment, x in the aforementioned compositional formula (1) is adjusted to satisfy a relation of $0 \leq x \leq 0.3$. In order to further suppress generation of the aforementioned heterogeneous phase, the value x is preferably adjusted to satisfy a relation of $x \leq 0.25$, more preferably a relation of $x \leq 0.2$. Meanwhile, in order to improve the oxygen permeability of the oxygen-permeable film 10, the value x is preferably adjusted to satisfy a relation of $0.15 \leq x$, more preferably a relation of $0.15 \leq x$. In order to suppress generation of the aforementioned heterogeneous phase, and to secure the oxygen permeability of the oxygen-permeable film 10, for example, x in the aforementioned compositional formula (1) is preferably adjusted to satisfy a relation of $0.15 \leq x \leq 0.25$. In the electron conductor of the present embodiment, M in formula (1) is particularly preferably calcium (Ca) or strontium (Sr). When the aforementioned M is calcium (Ca), the relative density of the oxygen-permeable film 10 can be increased, and the oxygen permeation rate thereof can be increased. Meanwhile, when the aforementioned M is strontium (Sr), formation of a solid solution of M in zirconia contained in the oxygen-permeable film 10 can be suppressed. When M in formula (1) is calcium (Ca) or strontium (Sr) in the electron conductor of the present embodiment, x is particularly preferably 0.2. As described above, z in the aforementioned compositional formula (1) corresponds to a change in amount of oxygen atoms in association with the proportions of the metal elements forming the electron conductor represented by formula (1), or the environmental temperature or atmosphere. For example, z may be a value within a range of 0 to 0.2.

Each of the oxygen ion conductor and the electron conductor may be formed through, for example, the solid-phase reaction method. The solid-phase reaction method is a well-known method in which powdery raw materials (e.g., oxides, carbonates, or nitrates) are weighed and mixed so that the proportions of metal elements contained in the powdery raw materials correspond to a specific composition of an oxide to be formed, and the resultant mixture is subjected to thermal treatment (firing), to thereby synthesize a desired oxide. Each of the oxygen ion conductor and the electron conductor may be produced through a method other than the solid-phase reaction method; for example, any method capable of producing a composite oxide, such as the co-precipitation method, the Pechini method, or the sol-gel method. The Pechini method is a method in which a precursor is prepared through esterification reaction between a polyalcohol (e.g., ethylene glycol) and a chelate compound of metal ions and citric acid, and oxide particles are produced through thermal treatment of the precursor.

The oxygen-permeable film 10 may be produced through, for example, the following procedure: the oxygen ion conductor and the electron conductor are provided in powder form having a sufficiently small particle size; the powder particles of these conductors are thoroughly mixed; and the resultant mixture is fired after shaping. Thorough mixing of the oxygen ion conductor and the electron conductor, which are provided in powder form having a sufficiently small particle size, may be carried out by means of, for example, a ball mill. Shaping of a mixture of the oxygen ion conductor and the electron conductor may be carried out through, for example, press shaping. In order to produce a sufficiently dense sintered compact, the firing temperature of a mixture of the oxygen ion conductor and the electron conductor is preferably adjusted to, for example, 1,200°C or higher, more preferably 1,300°C or higher. Meanwhile, in order to suppress reaction between the oxygen ion conductor and the electron conductor, the firing temperature of a mixture of the oxygen ion conductor and the electron conductor is preferably adjusted to, for example, 1,650°C or lower, more preferably 1,500°C or lower. The oxygen-permeable film produced through firing of the aforementioned mixture may have a thickness of, for example, 1 to 1,000 $\mu$m.

The mixing proportions of the oxygen ion conductor and the electron conductor forming the oxygen-permeable film 10 may be appropriately determined in consideration of the oxygen permeability of the oxygen-permeable film 10, which is based on the balance between oxygen ion conductivity and electron conductivity achieved by the respective oxides. In the oxygen-permeable film 10 formed of a mixture of the oxygen ion conductor and the electron conductor, the mixing proportion of the electron conductor is preferably, for example, 5 mol% or more. The aforementioned mixing proportion is, for example, 50 mol% or less, preferably 40 mol% or less, more preferably 30 mol% or less.

B. Configuration of reformer:

The reformer 20 shown in FIG. 1 includes the above-described oxygen-permeable film 10; a reforming raw material flow path 16 which is formed on a first surface of the oxygen-permeable film 10, and through which a reforming raw material fluid flows; and an air flow path 18 which is formed on a second surface of the oxygen-permeable film 10, and through which air (i.e., oxygen-containing gas) flows. The oxygen-permeable film 10 has oxygen ion permeability; i.e., the oxygen-permeable film 10 has such a property that oxygen specifically permeates therethrough from a high oxygen partial pressure side of the film to a low oxygen partial pressure side of the film. Therefore, in the reformer 20, oxygen flowing through the air flow path 18 permeates through the oxygen-permeable film 10 toward the reforming raw material flow path 16. In the reformer 20 of the present embodiment, at the surface of the oxygen-permeable film 10 on the reforming raw material flow path 16 side, partial oxidation reaction of the reforming raw material proceeds by means of oxygen which has permeated through the oxygen-permeable film 10.

FIG. 1 schematically shows, by a broken line, a state where the oxygen partial pressure on the air flow path 18 side ($PO_2$) is higher than the oxygen partial pressure on the reforming raw material flow path 16 side ($P'O_2$), and an oxygen partial pressure gradient is generated between opposite surfaces of the oxygen-permeable film 10. By means of such an oxygen partial pressure difference between the opposite surfaces as a driving force, oxygen permeates through the oxygen-permeable film 10 from the high oxygen partial pressure side (air flow path 18) to the low oxygen partial pressure side (reforming raw material flow path 16). In this case, oxygen molecules flowing through the air flow path 18 are ionized at the surface of the oxygen-permeable film 10 on the air flow path 18 side, and the resultant oxygen ions permeate through the oxygen-permeable film 10, which has oxygen ion conductivity, toward the reforming raw material flow path 16. Since the oxygen-permeable film 10 of the present embodiment has both oxygen ion conductivity and electron conductivity, when oxygen ions permeate through the film as described above, electrons permeate through the film in a direction opposite the flowing direction of oxygen ions. Therefore, oxygen can permeate through the oxygen-permeable film 10 without application of voltage thereto from the outside. The electron conductivity of the oxygen-permeable film 10 may correspond to both or either of electron conduction and hole conduction. As used herein, the expression "the oxygen-permeable film 10 has electron conductivity" refers to the case where the film has both or either of electron conductivity and hole conductivity.

When oxygen is transported toward the reforming raw material flow path 16 as described above, the reforming raw material is reformed through partial oxidation reaction on the reforming raw material flow path 16 side of the oxygen-permeable film 10. The reforming raw material employed may be any gas fuel or liquid fuel. The gas fuel may be a hydrocarbon-containing fuel; for example, methane or a natural gas containing methane as a main component. The liquid fuel may be, for example, a liquid hydrocarbon, an alcohol such as methanol, or an ether. One example of partial oxidation reaction of the reforming raw material is partial oxidation reaction of methane shown below in formula (2).

$$CH_4 + (1/2)O_2 \rightarrow CO + 2H_2 \cdots \qquad (2)$$

The reformer 20, which produces hydrogen and carbon monoxide from a reforming raw material (e.g., a hydrocarbon) as described above, may be employed for, for example, producing hydrogen which is supplied, as a fuel gas, to a fuel cell. Alternatively, the reformer 20 may be employed for GTL (gas to liquid) technology; i.e., for producing a liquid hydrocarbon fuel through further hydrocarbon conversion by use of the above-obtained hydrogen and carbon monoxide. Although the reformer 20 shown in FIG. 1 has a configuration including one flat plate-like oxygen-permeable film 10, the reformer 20 may be implemented in various forms. For example, the reformer 20 may be formed to have a cylindrical structure; i.e., the air flow path 18 may be provided outside of the cylinder exposed to air, and the reforming raw material flow path 16 may be provided inside of the cylinder. In such a case, a path for supplying a reforming raw material may be connected to one end of the cylinder, and a path for extracting hydrogen and carbon monoxide produced through reforming reaction may be connected to the other end of the cylinder. Alternatively, the reformer 20 may have such a configuration that a plurality of flat plate-like oxygen-permeable films 10 are stacked, and reforming raw material flow paths 16 and air flow paths 18 are alternately provided between the stacked oxygen-permeable films 10.

According to the oxygen-permeable film 10 of the present embodiment having the aforementioned configuration, which is produced from a mixture prepared by mixing the aforementioned specific oxygen ion conductor and electron conductor in specific proportions, reaction between the oxygen ion conductor and the electron conductor can be suppressed in a firing process during production of the oxygen-permeable film 10. Specifically, there can be produced an oxygen-permeable film containing substantially no heterogeneous phase having a composition different from that of the oxygen ion conductor or the electron conductor. When generation of such a heterogeneous phase, which generally has high resistance (i.e., low oxygen ion conductivity or electron conductivity), is suppressed, deterioration of the performance of the oxygen-permeable film 10, which would otherwise be caused by generation of the heterogeneous phase, can be suppressed.

Whether or not a heterogeneous phase is substantially generated may be determined by analyzing the oxygen-permeable film 10 (i.e., a sample) through X-ray diffractometry, and by comparing peaks of the thus-obtained X-ray diffraction pattern. Specifically, there are determined the integrated intensity of X-ray diffraction peaks attributed to the oxygen ion conductor, the integrated intensity of X-ray diffraction peaks attributed to the electron conductor, and the integrated intensity of X-ray diffraction peaks attributed to the heterogeneous phase. Then, there is determined the ratio of the integrated intensity of the X-ray diffraction peaks attributed to the heterogeneous phase to the sum of the integrated intensities of the X-ray diffraction peaks attributed to the three different species. When the ratio is 2% or less, it can be determined that substantially no heterogeneous phase is generated.

According to the present embodiment, substantial generation of a heterogeneous phase in the oxygen-permeable film 10 can be prevented not only during production of the oxygen-permeable film 10, but also during operation of the reformer 20 including the oxygen-permeable film 10. Specifically, even when the oxygen-permeable film 10 is exposed to a high temperature corresponding to the operation temperature, reaction between the oxygen ion conductor and the electron conductor can be suppressed. During operation of the reformer 20, the surface of the oxygen-permeable film 10 on the reforming raw material flow path 16 side is exposed to a reducing atmosphere. However, even in this case, reduction of the oxygen ion conductor and the electron conductor forming the oxygen-permeable film 10 can be suppressed. That is, the reduction resistance of the oxygen-permeable film 10 can be improved by producing the oxygen-permeable film 10 from a mixture prepared by mixing the aforementioned specific oxygen ion conductor and electron conductor in specific proportions. Thus, according to the present embodiment, deterioration of the performance of the oxygen-permeable film 10, which would otherwise be caused by generation of a heterogeneous phase, can be suppressed, and consequently, deterioration of the performance of the reformer can also be suppressed.

The reduction resistance of the oxygen-permeable film may be evaluated by exposing the oxygen-permeable film to an atmosphere of 10% hydrogen and 90% nitrogen at 1,000°C for 24 hours, and then performing the above-described comparison of the integrated intensities of X-ray diffraction peaks for determining whether or not a heterogeneous phase is substantially generated. The operation temperature of the reformer 20 is generally about 800 to about 1,000°C. Therefore, when substantially no heterogeneous phase is generated after the aforementioned treatment in a reducing atmosphere, the oxygen-permeable film can be evaluated as having reduction resistance high enough to be incorporated into, for example, the reformer 20.

Since the oxygen-permeable film 10 is required to be a gas-impermeable dense film, the oxygen-permeable film 10 preferably has a relative density of 80% or more. As used herein, the term "relative density" of a sample refers to the ratio of the actual measured density of the sample to the theoretical density of the sample. The theoretical density of a sample can be determined on the basis of the lattice constant of the sample and the atomic weights of elements per unit lattice of the sample. The lattice constant of the sample can be determined through X-ray diffractometry (XRD measurement). The density of the sample can be actually measured through the Archimedes method.

When pores (fine pores) are provided in the oxygen-permeable film 10, an oxygen-containing gas permeates through the oxygen-permeable film via the pores. When an oxygen-containing gas permeates through the oxygen-permeable film via the pores, since the oxygen partial pressure difference becomes small between opposite surfaces of the oxygen-permeable film 10, the driving force for oxygen permeation may be lowered in the oxygen-permeable film 10, resulting in a decrease in oxygen permeation rate. When a gas other than oxygen (e.g., nitrogen) permeates via the pores from the air flow path 18 side toward the reforming raw material flow path 16 side, the effect of the oxygen-permeable film 10 in separating oxygen from air is lowered, which may result in low efficiency of partial oxidation reaction. The oxygen permeability of the oxygen-permeable film 10 is affected by, for example, the composition of the oxygen-permeable film 10 or the thickness of the oxygen-permeable film 10. In consideration of the aforementioned problems, the relative density of the oxygen-permeable film 10 is preferably 80% or more, more preferably 90% or more, much more preferably 95% or more.

The relative density of the oxygen-permeable film 10 may vary with the firing temperature. In the present embodiment, since the oxygen ion conductor employed is stabilized zirconia, and the electron conductor employed is an electron conductor represented by formula (1), an oxygen-permeable film having sufficiently high relative density (i.e., a dense oxygen-permeable film) can be produced at a lower firing temperature. The relative density of the oxygen-permeable film 10 is affected not only by the firing temperature during production of the oxygen-permeable film 10, but also by the mixing proportions of the oxygen ion conductor and the electron conductor. Therefore, the firing temperature and the mixing proportions should be appropriately determined in consideration of the intended relative density of the oxygen-permeable film 10.

The oxygen-permeable film 10 may have a catalyst on at least one surface of the film. For example, when a catalyst for promoting partial oxidation reaction is provided on the surface on the reforming raw material flow path 16 side, both a reforming raw material flowing through the reforming raw material flow path 16 and oxygen which has permeated through the oxygen-permeable film 10 must be supplied to the catalyst. Therefore, a reducing atmosphere is provided in the vicinity of the interface between the catalyst and the surface of the oxygen-permeable film 10 on the reforming raw material flow path 16 side. Thus, even when the catalyst is provided on the surface on the reforming raw material flow path 16 side, since the oxygen-permeable film 10 of the present embodiment exhibits excellent reduction resistance, the aforementioned effect of suppressing deterioration of the performance of the oxygen-permeable film 10 can be attained.

C. Modifications

Modification 1:

In the aforementioned embodiment, the oxygen-permeable film 10 is produced through firing of a mixture of the oxygen ion conductor and the electron conductor. However, the oxygen-permeable film 10 may be produced through a method including no firing process. The production (formation) method for the oxygen-permeable film 10 including no firing process may be a gas phase method such as CVD (chemical vapor deposition) or PVD (physical vapor deposition), or a spraying method. Even in such a case, when the oxygen-permeable film 10 is produced from a mixture prepared by mixing the aforementioned specific oxygen ion conductor and electron conductor in specific proportions, effects similar to those obtained in the embodiment can be attained. Thus, even when the oxygen-permeable film 10 is produced through a different production method, the relative density thereof is preferably adjusted to 80% or more.

Modification 2:

In the aforementioned embodiment, the oxygen-permeable film 10 is formed as an independent film shown in FIG. 1. However, the oxygen-permeable film 10 may be formed on a surface of a porous carrier (substrate or support). In such a case, a layer of an oxide mixture similar to that employed for the oxygen-permeable film 10 of the embodiment may be formed on the porous carrier through, for example, a PVD technique (e.g., PLD (pulse laser deposition)), dipping, spraying, or sputtering. Optionally, a firing process may be carried out.

Modification 3:

In the aforementioned embodiment, in the reformer 20, the air flow path 18 through which air flows is provided on the second surface of the oxygen-permeable film 10. However, a path through which a gas other than air flows may be provided on the second surface of the oxygen-permeable film 10. Since oxygen specifically permeates through the oxygen-permeable film 10, any oxygen-containing gas other than air may be supplied to the second surface of the oxygen-permeable film 10.

Modification 4:

In the aforementioned embodiment, the oxygen-permeable film 10 is incorporated into the reformer 20 for promoting partial oxidation reaction. However, the oxygen-permeable film 10 may be incorporated into an apparatus other than the reformer. For example, the oxygen-permeable film 10 may be employed in a pure oxygen production apparatus for producing high-purity oxygen gas from an oxygen-containing gas.

EXAMPLES

The present invention will next be described in more detail by way of examples, which should not be construed as limiting the invention thereto.

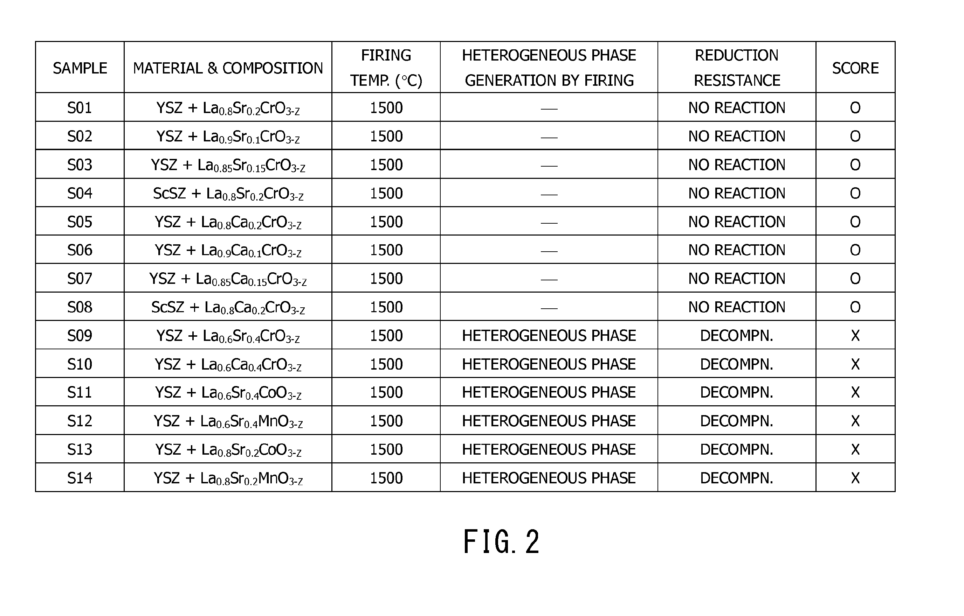

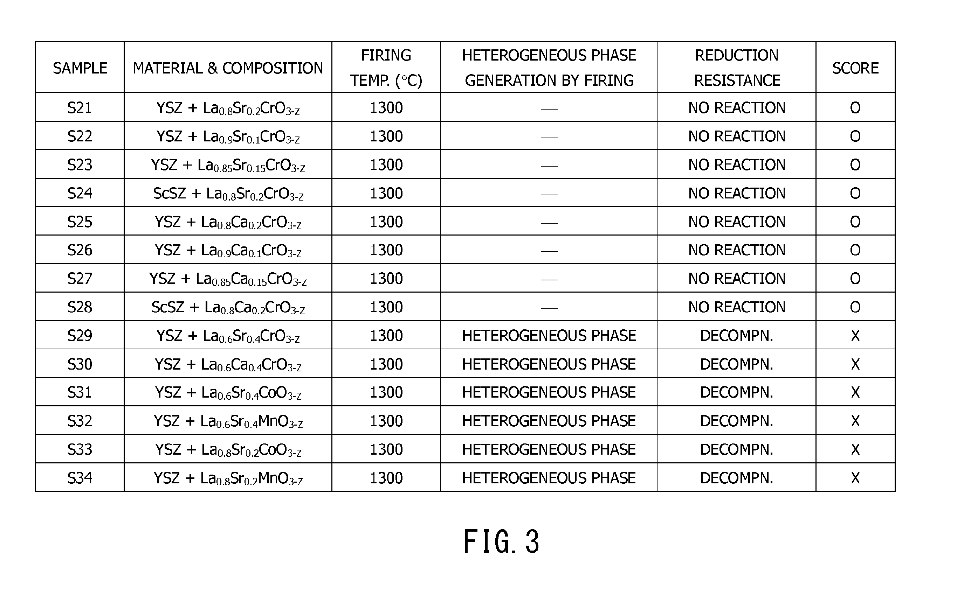

FIGs. 2 and 3 are tables showing the results of evaluation of the stability and reduction resistance of 28 oxygen-permeable films (samples S01 to S14 and S21 to S34). Next will be described the configurations of the respective samples, the production methods therefor, and the results of evaluation of the performances thereof.

A. Preparation of samples:

Samples S01 and S21

Each of samples S01 and S21 contains yttria-stabilized zirconia (YSZ) as an oxygen ion conductor, and contains $La_{0.8}Sr_{0.2}CrO_{3-z}$ as an electron conductor. Samples S01 and S21 differ from each other only in the below-described firing temperature.
TZ-8Y powder (product of Tosoh Corporation) was employed as YSZ. $La_{0.8}Sr_{0.2}CrO_{3-z}$ was prepared as follows. There were employed, as powdery raw materials, lanthanum oxide powder ($La_2O_3$, product of Wako Pure Chemical Industries, Ltd., purity: 99.9%), strontium carbonate powder ($SrCO_3$, product of Kojundo Chemical Laboratory Co., Ltd., purity: 99.9%), and chromium oxide powder ($Cr_2O_3$, product of Kojundo Chemical Laboratory Co., Ltd., purity: 99.99%).

These powdery raw materials were weighed so that the proportions of the metal elements corresponded to the aforementioned compositional proportions of the formula. Subsequently, these powdery raw materials were wet-mixed and milled with ethanol by means of $ZrO_2$ balls and a resin pot for 15 hours. Thereafter, ethanol was removed through hot water drying, and the resultant powdery mixture was heated to 1,500°C at a temperature elevation rate of 15°C/min. Then, calcination was carried out at 1,500°C for 24 hours, to thereby produce $La_{0.8}Sr_{0.2}CrO_{3-z}$ powder (i.e., calcined powder).

Subsequently, a dispersant and a binder were added to the calcined powder, and wet-mixing and milling were carried out with ethanol under the same conditions as those for producing the aforementioned calcined powder, followed by drying, to thereby prepare powder containing the calcined powder. Thereafter, the calcined-powder-containing powder was mixed with YSZ so that the mixing proportion of $La_{0.8}Sr_{0.2}CrO_{3-z}$ was 50 mol% in a mixture of YSZ and $La_{0.8}Sr_{0.2}CrO_{3-z}$, to thereby prepare a powdery mixture of YSZ and $La_{0.8}Sr_{0.2}CrO_{3-z}$. The powdery mixture was subjected to shaping through application of a force of 15 kN by means of a hydraulic press. The thus-shaped mixture was fired in air at 1,500°C (sample S01) or 1,300°C (sample S21) for 24 hours, to thereby produce pellets of the mixture of YSZ and $La_{0.8}Sr_{0.2}CrO_{3-z}$ (i.e., sample S01 or S21). For preparation of the aforementioned powdery mixture, the amount of the calcined-powder-containing powder mixed was determined under the assumption that the calcined powder was formed of 100% $La_{0.8}Sr_{0.2}CrO_{3-z}$.

Samples S02, S03, S09, S22, S23, and S29

Each of samples S02, S03, S09, S22, S23, and S29 contains yttria-stabilized zirconia (YSZ) as an oxygen ion conductor. Each of samples S02 and S22 contains $La_{0.9}Sr_{0.1}CrO_{3-z}$ as an electron conductor; each of samples S03 and S23 contains $La_{0.85}Sr_{0.15}CrO_{3-z}$ as an electron conductor; and each of samples S09 and S29 contains $La_{0.6}Sr_{0.4}CrO_{3-z}$ as an electron conductor. Samples S02 and S12, samples S03 and S23, or samples S09 and S29 differ from each other only in the below-described firing temperature.

Samples S02, S03, S09, S22, S23, and S29 were produced in the same manner as in the case of samples S01 and S21. For preparation of the electron conductor $La_{0.9}Sr_{0.1}CrO_{3-z}$, $La_{0.85}Sr_{0.15}CrO_{3-z}$, or $La_{0.6}Sr_{0.4}CrO_{3-z}$, powdery raw materials were weighed so that the proportions of the metal elements corresponded to the compositional proportions of the formula of the intended electron conductor. The firing temperature for samples S02, S03, and S09 was adjusted to 1,500°C, and the firing temperature for samples S22, S23, and S29 was adjusted to 1,300°C.

Samples S04 and S24

Each of samples S04 and S24 contains scandia-stabilized zirconia (ScSZ) as an oxygen ion conductor, and contains $La_{0.8}Sr_{0.2}CrO_{3-z}$ as an electron conductor. Samples S04 and S24 differ from each other only in the below-described firing temperature.

Samples S04 and S24 were produced in the same manner as in the case of samples S01 and S21, except that ScSZ was employed as an oxygen ion conductor. ScSZ employed in samples S04 and S24 was scandia-stabilized zirconia containing scandium (Sc) and cerium (Ce) (10Sc1CeSZ, product of Daiichi Kigenso Kagaku Kogyo Co., Ltd.). The firing temperature for sample S04 was adjusted to 1,500°C, and the firing temperature for sample S24 was adjusted to 1,300°C.

Samples S05 to S07, S10, S25 to S27, and S30

Each of samples S05 to S07, S10, S25 to S27, and S30 contains yttria-stabilized zirconia (YSZ) as an oxygen ion conductor. Each of samples S05 and S25 contains $La_{0.8}Ca_{0.2}CrO_{3-z}$ as an electron conductor; each of samples S06 and S26 contains $La_{0.9}Ca_{0.1}CrO_{3-z}$ as an electron conductor; each of samples S07 and S27 contains $La_{0.85}Ca_{0.15}CrO_{3-z}$ as an electron conductor; and each of samples S10 and S30 contains $La_{0.6}Ca_{0.4}CrO_{3-z}$ as an electron conductor. Samples S05 and S25, samples S06 and S26, samples S07 and S27, or samples S10 and S30 differ from each other only in the below-described firing temperature.

Samples S05 to S07, S10, S25 to S27, and S30 were produced in the same manner as in the case of samples S01 and S21. For preparation of the electron conductor $La_{0.8}Ca_{0.2}CrO_{3-z}$, $La_{0.9}Ca_{0.1}CrO_{3-z}$, $La_{0.85}Ca_{0.15}CrO_{3-z}$, or $La_{0.6}Ca_{0.4}CrO_{3-z}$, calcium carbonate ($CaCO_3$, product of Wako Pure Chemical Industries, Ltd., purity: 99.9%) was employed as a powdery raw material instead of strontium carbonate. These powdery raw materials were weighed so that the proportions of the metal elements corresponded to the compositional proportions of the formula of the intended electron conductor. The firing temperature for samples S05 to S07 and S10 was adjusted to 1,500°C, and the firing temperature for samples S25 to S27 and S30 was adjusted to 1,300°C.

Samples S08 and S28

Each of samples S08 and S28 contains scandia-stabilized zirconia (ScSZ) as an oxygen ion conductor, and contains $La_{0.8}Ca_{0.2}CrO_{3-z}$ as an electron conductor. Samples S08 and S28 differ from each other only in the below-described firing temperature.

Samples S08 and S28 were produced in the same manner as in the case of samples S05 and S25, except that ScSZ was employed as an oxygen ion conductor. ScSZ employed in samples S08 and S28 was scandia-stabilized zirconia containing scandium (Sc) and cerium (Ce) (10Sc1CeSZ, product of Daiichi Kigenso Kagaku Kogyo Co., Ltd.). The firing temperature for sample S08 was adjusted to 1,500°C, and the firing temperature for sample S28 was adjusted to 1,300°C.

Samples S11 and S31

Each of samples S11 and S31 contains yttria-stabilized zirconia (YSZ) as an oxygen ion conductor, and contains $La_{0.6}Sr_{0.4}CoO_{3-z}$ as an electron conductor. Samples S11 and S31 differ from each other only in the below-described firing temperature.

Samples S11 and S31 were produced in the same manner as in the case of samples S01 and S21. For preparation of the electron conductor $La_{0.6}Sr_{0.4}CoO_{3-z}$, there were employed, as powdery raw materials, lanthanum oxide powder ($La_2O_3$, product of Wako Pure Chemical Industries, Ltd., purity: 99.9%), strontium carbonate powder ($SrCO_3$, product of Kojundo Chemical Laboratory Co., Ltd., purity: 99.9%), and cobalt oxide powder ($Co_3O_4$, product of Kojundo Chemical Laboratory Co., Ltd., purity: 99.9%). These powdery raw materials were weighed so that the proportions of the metal elements corresponded to the compositional proportions of the formula of the intended electron conductor. The firing temperature for sample S11 was adjusted to 1,500°C, and the firing temperature for sample S31 was adjusted to 1,300°C.

Samples S12 and S32

Each of samples S12 and S32 contains yttria-stabilized zirconia (YSZ) as an oxygen ion conductor, and contains $La_{0.6}Sr_{0.4}MnO_{3-z}$ as an electron conductor. Samples S12 and S32 differ from each other only in the below-described firing temperature.

Samples S12 and S32 were produced in the same manner as in the case of samples S01 and S21. For preparation of the electron conductor $La_{0.6}Sr_{0.4}MnO_{3-z}$, there were employed, as powdery raw materials, lanthanum oxide powder ($La_2O_3$, product of Wako Pure Chemical Industries, Ltd., purity: 99.9%), strontium carbonate powder ($SrCO_3$, product of Kojundo Chemical Laboratory Co., Ltd., purity: 99.9%), and manganese oxide powder ($M_2O_3$, product of Kojundo Chemical Laboratory Co., Ltd., purity: 99.9%). These powdery raw materials were weighed so that the proportions of the metal elements corresponded to the compositional proportions of the formula of the intended electron conductor. The firing temperature for sample S12 was adjusted to 1,500°C, and the firing temperature for sample S32 was adjusted to 1,300°C.

Samples S13 and S33

Each of samples S13 and S33 contains yttria-stabilized zirconia (YSZ) as an oxygen ion conductor, and contains $La_{0.8}Sr_{0.2}CoO_{3-z}$ as an electron conductor. Samples S13 and S33 differ from each other only in the below-described firing temperature.

Samples S13 and S33 were produced in the same manner as in the case of samples S11 and S31. For preparation of the electron conductor $La_{0.8}Sr_{0.2}CoO_{3-z}$, powdery raw materials were weighed so that the proportions of the metal elements corresponded to the compositional proportions of the formula of the intended electron conductor. The firing temperature for sample S13 was adjusted to 1,500°C, and the firing temperature for sample S33 was adjusted to 1,300°C.

Samples S14 and S34

Each of samples S14 and S34 contains yttria-stabilized zirconia (YSZ) as an oxygen ion conductor, and contains $La_{0.8}Sr_{0.2}MnO_{3-z}$ as an electron conductor. Samples S14 and S34 differ from each other only in the below-described firing temperature.

Samples S14 and S34 were produced in the same manner as in the case of samples S12 and S32. For preparation of the electron conductor $La_{0.8}Sr_{0.2}MnO_{3-z}$, powdery raw materials were weighed so that the proportions of the metal elements corresponded to the compositional proportions of the formula of the intended electron conductor.

The firing temperature for sample S14 was adjusted to 1,500°C, and the firing temperature for sample S34 was adjusted to 1,300°C.

B. Reactivity between oxygen ion conductor and electron conductor:

Each sample was evaluated in terms of the reactivity between the oxygen ion conductor and the electron conductor forming the oxygen-permeable film. Specifically, there was determined whether or not a heterogeneous phase, which has a composition different from that of the oxygen ion conductor or the electron conductor, was generated generation of the heterogeneous phase is caused by reaction between the oxygen ion conductor and the electron conductor. The reactivity was evaluated through powder X-ray diffractometry (CuK$\alpha$) by means of MIniFlex (product of Rigaku Corporation).

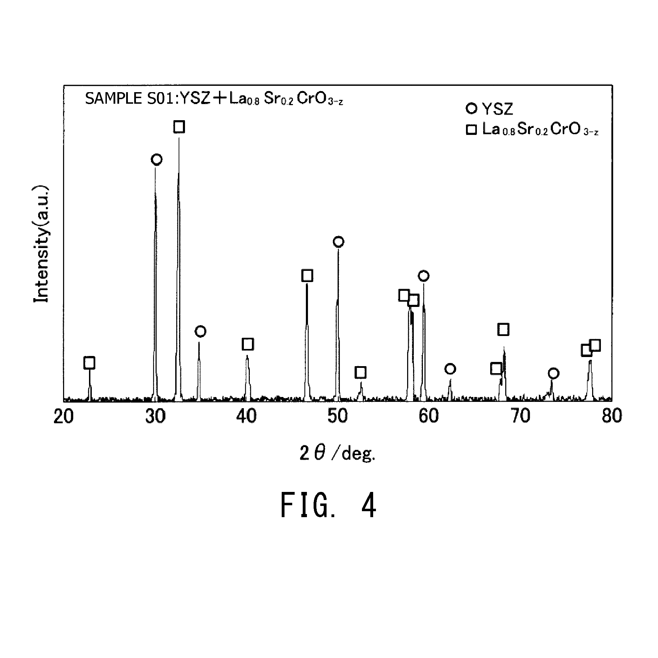

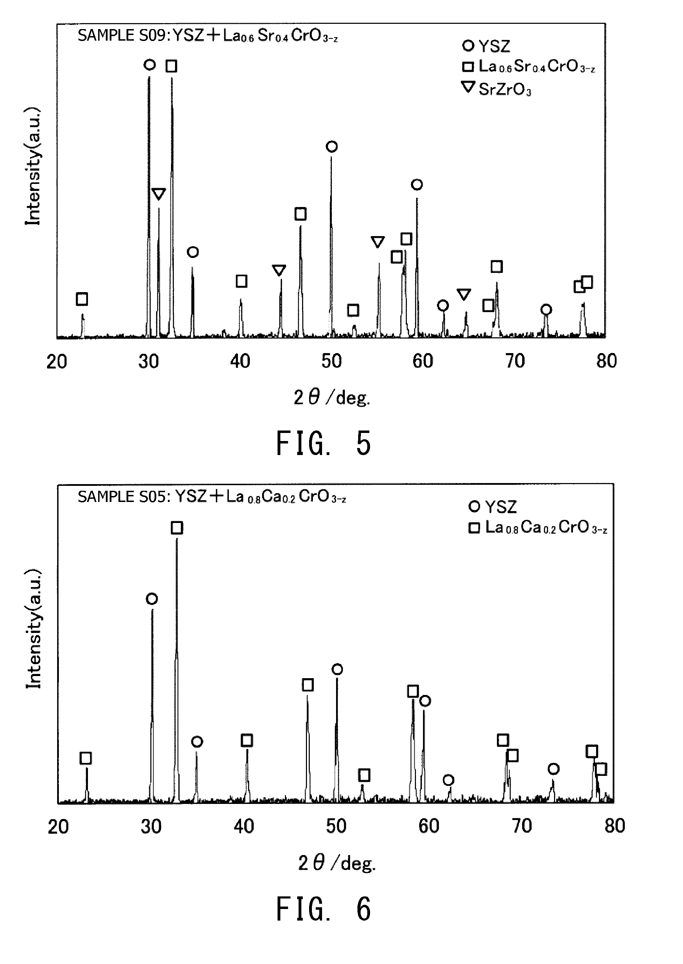

FIG. 4 shows an X-ray diffraction pattern of sample S01, and FIG. 5 shows an X-ray diffraction pattern of sample S09. When the oxygen ion conductor reacts with the electron conductor in a sample, peaks corresponding to a substance generated through the reaction are observed in the X-ray diffraction pattern of the sample, in addition to peaks corresponding to the oxygen ion conductor and the electron conductor. Therefore, the integrated intensity ratio of X-ray diffraction peaks attributed to a substance generated through reaction between the oxygen ion conductor and the electron conductor was determined on the basis of the X-ray diffraction pattern of each sample. The integrated intensity ratio of X-ray diffraction peaks attributed to a substance generated through the aforementioned reaction (hereinafter may be referred to simply as "integrated intensity ratio") is determined by use of the following formula (3).

$$\text{Integrated intensity ratio} = c1/(a1 + b1 + c1) \cdot \cdot \cdot (3)$$

In this formula, a1 represents the integrated intensity of X-ray diffraction peaks attributed to the oxygen ion conductor; b1 represents the integrated intensity of X-ray diffraction peaks attributed to the electron conductor; and c1 represents the integrated intensity of X-ray diffraction peaks attributed to a substance generated through the aforementioned reaction. When the integrated intensity ratio was 2% or less, it was regarded that substantially no heterogeneous phase having a composition different from that of the oxygen ion conductor or the electron conductor was generated in a firing process for producing the oxygen-permeable film. In general, X-ray diffraction peaks attributed to each compound correspond to the respective crystal planes of the compound. For determination of the integrated intensity corresponding to each compound, the peak of highest intensity was selected from among X-ray diffraction peaks attributed to the compound (when the peak of highest intensity overlaps with another peak, the peak of second highest intensity was selected).

Specifically, in the case of sample S01 or sample 09, in which YSZ is employed as an oxygen ion conductor, and $La_{1-x}Sr_xCrO_{3-z}$ is employed as an electron conductor, a heterogeneous phase having a composition of $SrZrO_3$ may be generated. In such a case, in the aforementioned formula (3), a1 is the integrated intensity of a peak attributed to (101) plane of the YSZ phase, b1 is the integrated intensity of a peak attributed to (110) plane of the $La_{0.8}Sr_{0.2}CrO_{3-z}$ phase, and c1 is the integrated intensity of a peak attributed to (110) plane of the $SrZrO_3$ phase.

In sample S01 (electron conductor: $La_{0.8}Sr_{0.2}CrO_{3-z}$), the integrated intensity ratio was found to be 2% or less, indicating that substantially no heterogeneous phase was generated even when firing was carried out for producing sample S01 (see FIG. 4). In contrast, in sample S09 (electron conductor: $La_{0.6}Sr_{0.4}CrO_{3-z}$), the integrated intensity ratio was found to be more than 2%, indicating that a heterogeneous phase was generated (see FIG. 5).

FIG. 6 shows an X-ray diffraction pattern of sample S05. When YSZ is employed as an oxygen ion conductor, and $La_{1-x}Ca_xCrO_{3-z}$ is employed as an electron conductor, a heterogeneous phase having a composition of $La_2Zr_2O_7$ may be generated. In sample S05 (electron conductor: $La_{0.8}Ca_{0.2}CrO_{3-z}$), the integrated intensity ratio determined by the aforementioned formula (3) was found to be 2% or less, indicating that substantially no heterogeneous phase was generated even when firing was carried out for producing sample S05. In contrast, in sample S10 (electron conductor: $La_{0.6}Ca_{0.4}CrO_{3-z}$), the integrated intensity ratio was found to be more than 2%, indicating that a heterogeneous phase was generated (data are not illustrated).

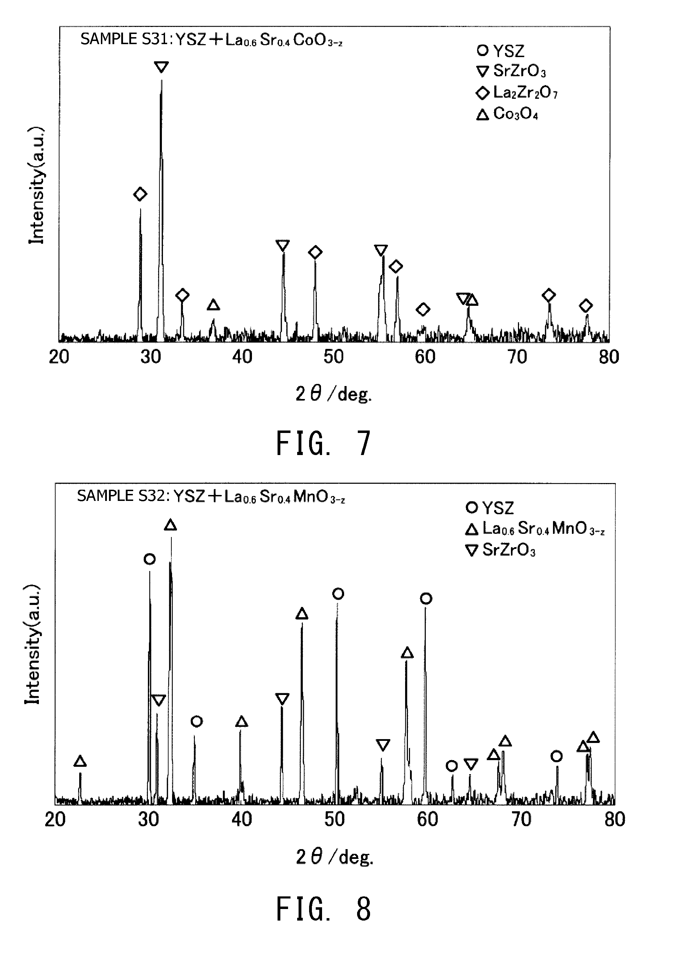

FIG. 7 shows an X-ray diffraction pattern of sample S31. As shown in FIG. 7, when YSZ is employed as an oxygen ion conductor, and $La_{1-x}Sr_xCoO_{3-z}$ is employed as an electron conductor, a heterogeneous phase having a composition of, for example, $SrZrO_3$, $La_2Zr_2O_7$, or $Co_3O_4$ may be generated. In sample S31, the integrated intensity ratio determined by the aforementioned formula (3) was found to be more than 2%, indicating that a heterogeneous phase was generated (see FIG. 7). More specifically, in the X-ray diffraction pattern of sample S31, virtually no peak attributed to the electron conductor $La_{0.6}Sr_{0.4}CoO_{3-z}$ was observed. That is, almost the entire electron conductor reacted with the oxygen ion conductor in a firing process for producing the sample, to thereby generate a heterogeneous phase. Meanwhile, a sample having the same composition as sample S31 was produced through firing at 1,100°C, which is lower than the firing temperature during production of sample S31. As a result, the sample was found to contain a heterogeneous phase having a composition of, for example, $La_2Zr_2O_7$ and coexisting with the oxygen ion conductor and the electron conductor (data are not illustrated).

FIG. 8 shows an X-ray diffraction pattern of sample S32. As shown in FIG. 8, when YSZ is employed as an oxygen ion conductor, and $La_{1-x}Sr_xMnO_{3-z}$ is employed as an electron conductor, a heterogeneous phase having a composition of $SrZrO_3$ may be generated. In sample S32, the integrated intensity ratio was determined by the aforementioned formula (3) wherein a1 was the integrated intensity of a peak attributed to (101) plane of the YSZ phase, b1 was the integrated intensity of a peak attributed to (104) plane of the $La_{0.6}Sr_{0.4}MnO_{3-z}$ phase, and c1 was the integrated intensity of a peak attributed to (110) plane of the $SrZrO_3$ phase. As a result, in sample S32, the integrated intensity ratio was found to be more than 2%, indicating that a heterogeneous phase was generated (see FIG. 8).

In each of the other samples, the integrated intensity ratio was determined on the basis of an X-ray diffraction pattern in the same manner as described above. A sample in which the integrated intensity ratio was 2% or less was regarded as containing no heterogeneous phase (i.e., generation of no heterogeneous phase during firing for production of the sample). FIGs. 2 and 3 show the results of evaluation of the respective samples in terms of heterogeneous phase generation.

In general, when the firing temperature during production of a sample is higher, a heterogeneous phase is more likely to be generated. However, in the case where $La_{1-x}Sr_xCrO_{3-z}$ (wherein x is 0.1 to 0.2) or $La_{1-x}Ca_xCrO_{3-z}$ (wherein x is 0.1 to 0.2) was employed as an electron conductor, even when the firing temperature during production of a sample was relatively high (i.e., 1,500°C), no heterogeneous phase was generated (see samples S01 to S08 in FIG. 2 and samples S21 to S28 in FIG. 3). In contrast, in the case where $La_{1-x}Sr_xCrO_{3-z}$ (wherein x is 0.4), $La_{1-x}Ca_xCrO_{3-z}$ (wherein x is 0.4), $La_{1-x}Sr_xCoO_{3-z}$, or $La_{1-x}Sr_xMnO_{3-z}$ was employed as an electron conductor, even when the firing temperature during production of a sample was relatively low (i.e., 1,300°C), a heterogeneous phase was generated (see samples S09 to S14 in FIG. 2 and samples S29 to S34 in FIG. 3).

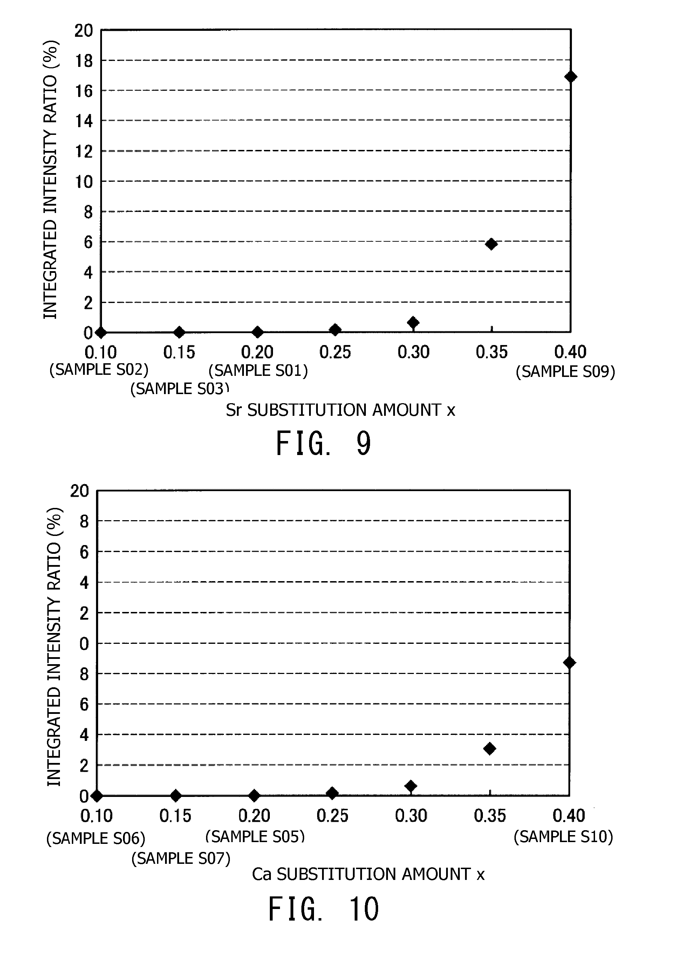

As in the case of, for example, sample S01, a plurality of samples were produced by employing YSZ as an oxygen ion conductor and $La_{1-x}Sr_xCrO_{3-z}$ as an electron conductor, and varying the value x (i.e., the amount of Sr substitution). FIG. 9 shows the results of determination of the integrated intensity ratios for the samples. For production of the samples, the value x was varied within a range of 0.10 to 0.40. In FIG. 9, a sample (x = 0.10) corresponds to sample S02 in FIG. 2, a sample (x = 0.15) corresponds to sample S03 in FIG. 2, a sample (x = 0.20) corresponds to sample S01 in FIG. 2, and a sample (x = 0.40) corresponds to sample S09 in FIG. 2. As shown in FIG. 9, when $La_{1-x}Sr_xCrO_{3-z}$ was employed as an electron conductor, and x was adjusted to 0.30 or less, the resultant oxygen-permeable film was found to contain substantially no heterogeneous phase.

As in the case of, for example, sample S05, a plurality of samples were produced by employing YSZ as an oxygen ion conductor and $La_{1-x}Ca_xCrO_{3-z}$ as an electron conductor, and varying the value x (i.e., the amount of Ca substitution). FIG. 10 shows the results of determination of the integrated intensity ratios for the samples. For production of the samples, the value x was varied within a range of 0.10 to 0.40. In FIG. 10, a sample (x = 0.10) corresponds to sample S06 in FIG. 2, a sample (x = 0.15) corresponds to sample S07 in FIG. 2, a sample (x = 0.20) corresponds to sample S05 in FIG. 2, and a sample (x = 0.40) corresponds to sample S10 in FIG. 2. As shown in FIG. 10, when $La_{1-x}Ca_xCrO_{3-z}$ was employed as an electron conductor, and x was adjusted to 0.30 or less, the resultant oxygen-permeable film was found to contain substantially no heterogeneous phase.

C. Reduction resistance of oxygen-permeable film:

Samples S01 to S14 and S21 to S34 were evaluated in terms of reduction resistance. For evaluation of reduction resistance, each sample was thermally treated in a reducing atmosphere. Specifically, each of the produced samples (in pellet form) was heated to 1,000°C at a rate of 5°C/min in an atmosphere of 10% hydrogen and 90% nitrogen, and the sample was thermally treated at 1,000°C for 24 hours. Thereafter, the sample was subjected to the aforementioned X-ray diffractometry, to thereby determine the integrated intensity ratio of peaks attributed to a heterogeneous phase. Thermal treatment in the reducing atmosphere was carried out by means of an atmosphere-controlling firing furnace for metal (FD-20X20X30-1Z2-20, product of NEMS Co., Ltd.). When the integrated intensity ratio of X-ray diffraction peaks attributed to a heterogeneous phase was 2% or less (i.e., when substantially no heterogeneous phase was generated) in a sample, it was regarded that no reaction occurred between the oxygen ion conductor and the electron conductor in the sample, and the sample exhibited excellent reduction resistance.

FIGs. 2 and 3 show the results of evaluation of the reduction resistance of the respective samples. Samples S01 to S08 and S21 to S28 were evaluated as having excellent reduction resistance (i.e., no reaction between the oxygen ion conductor and the electron conductor). In contrast, in each of samples S09 to S14 and S29 to S34, a heterogeneous phase was generated through thermal treatment in the reducing atmosphere, and decomposition of the oxygen ion conductor and/or the electron conductor proceeded. As shown in FIGs. 2 and 3, rating "O" was assigned in the case where no heterogeneous phase was generated through firing during production of a sample, and the oxygen ion conductor did not react with the electron conductor during the reduction resistance test of the sample, whereas rating "X" was assigned in the other cases.

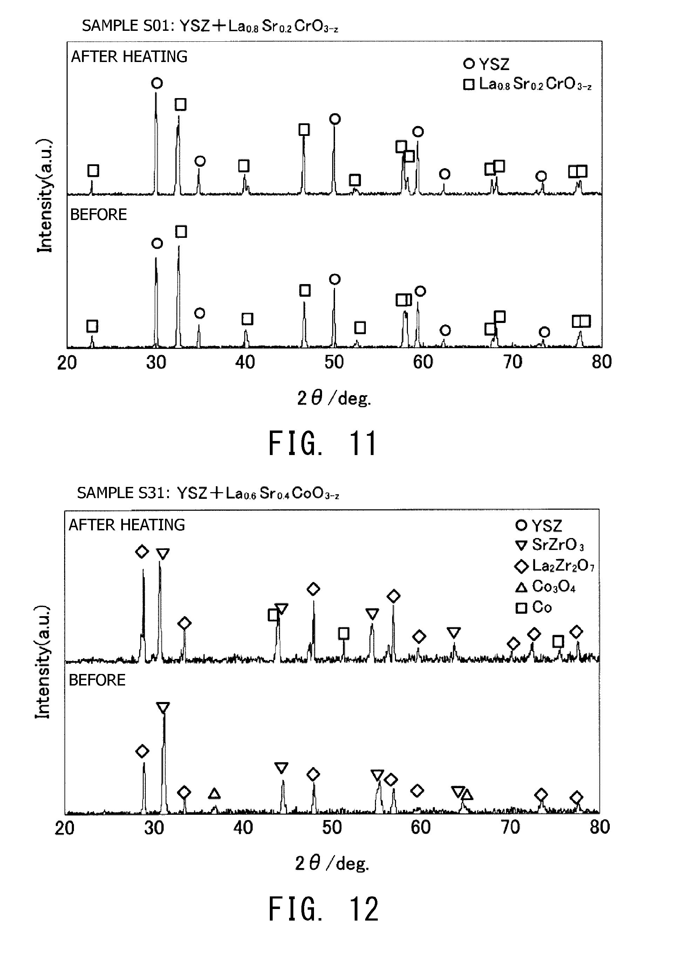

FIG. 11 or 12 shows X-ray diffraction patterns of a sample before and after thermal treatment thereof in a reducing atmosphere. FIG. 11 shows X-ray diffraction patterns of sample S01, and FIG. 12 shows X-ray diffraction patterns of sample S31. As shown in FIG. 11, in the case of sample S01, virtually no difference was observed between the X-ray diffraction pattern before the thermal treatment in a reducing atmosphere and that after the thermal treatment. In contrast, in the case of sample S31, a considerable difference was observed between the X-ray diffraction pattern before the thermal treatment in a reducing atmosphere and that after the thermal treatment. As described above, in sample S31, almost the entire electron conductor reacted with the oxygen ion conductor in a firing process at 1,300°C during production of the sample, to thereby generate a heterogeneous phase. It was found that when the thus-produced sample S31 was thermally treated at 1,000°C in a reducing atmosphere, a heterogeneous phase of, for example, Co was also generated, leading to further decomposition. When sample S32 was thermally treated in a reducing atmosphere, breakage of pellets was observed. Conceivably, this is attributed to the fact that a heterogeneous phase is generated through thermal treatment in a reducing atmosphere, and expansion of the sample through reduction causes pellet breakage.

D. Relative density and oxygen permeation flux density:

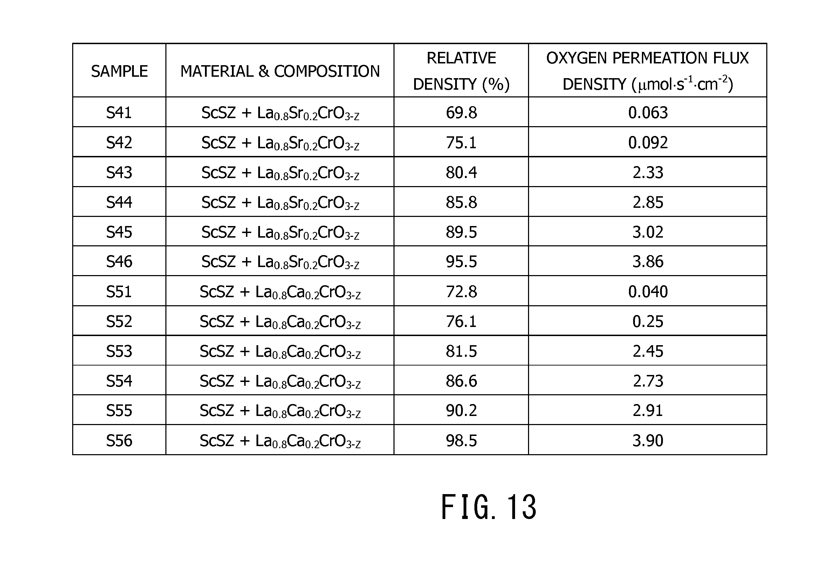

FIG. 13 shows the results of a test for determining the relationship between the relative density and oxygen permeability of oxygen-permeable films. Specifically, FIG. 13 summarizes materials (compositions) employed for producing samples, and the relative density and oxygen permeation flux density (oxygen permeation rate) of the respective samples. As in the case of sample S04 or S24, there were produced samples S41 to S46 (i.e., oxygen-permeable films) having different relative densities from a mixture of ScSZ (oxygen ion conductor) and $La_{0.8}Sr_{0.2}CrO_{3-z}$ (electron conductor). Meanwhile, as in the case of sample S08 or S28, there were produced samples S51 to S56 (i.e., oxygen-permeable films) having different relative densities from a mixture of ScSZ (oxygen ion conductor) and $La_{0.8}Ca_{0.2}CrO_{3-z}$ (electron conductor).

The oxygen-permeable film samples S41 to S45 were produced in a manner similar to that in the case of sample S04 or S24. However, the mixing proportion of $La_{0.8}Sr_{0.2}CrO_{3-z}$ was adjusted to 20 mol% in a mixture of ScSZ and $La_{0.8}Sr_{0.2}CrO_{3-z}$. The relative densities of the oxygen-permeable films were varied by varying the firing temperature during production of the oxygen-permeable films in a range of 1,100°C to 1,500°C.

The oxygen-permeable film sample S46 was produced in the same manner as samples S41 to S45, except for the firing process. In the case of sample S46, the first firing process was carried out in an $N_2$ atmosphere at 1,500°C for 24 hours, and then the second firing process was carried out in an air atmosphere at 1,500°C for 24 hours.

The oxygen-permeable film samples S51 to S55 were produced in a manner similar to that in the case of sample S08 or S28. However, the mixing proportion of $La_{0.8}Ca_{0.2}CrO_{3-z}$ was adjusted to 20 mol% in a mixture of ScSZ and $La_{0.8}Ca_{0.2}CrO_{3-z}$. The relative densities of the oxygen-permeable films were varied by varying the firing temperature during production of the oxygen-permeable films in a range of 1,100°C to 1,500°C. The firing temperatures for samples S41, S42, S43, S44, and S45 were adjusted to be equal to those for samples S51, S52, S53, S54, and S55, respectively.

The oxygen-permeable film sample S56 was produced in the same manner as samples S51 to S55, except for the firing process. Sample S56 was produced through firing under the same conditions as sample S46.

The relative density of each sample is determined as the ratio of the actual measured density of the sample to the theoretical density thereof. The theoretical density of each sample was determined on the basis of the lattice constant of the sample and the atomic weights of elements per unit lattice of the sample. The lattice constant of each sample was determined through X-ray diffractometry (XRD measurement) by means of RINT-TTRIII (product of Rigaku Corporation). The actual density of each sample was measured through the Archimedes method. Specifically, water was employed as a liquid, and the weight of each sample was measured in water and in air by means of an electronic balance (AW220, product of Shimadzu Corporation). The density of the sample was calculated on the basis of the specific gravity of water at the temperature during measurement.

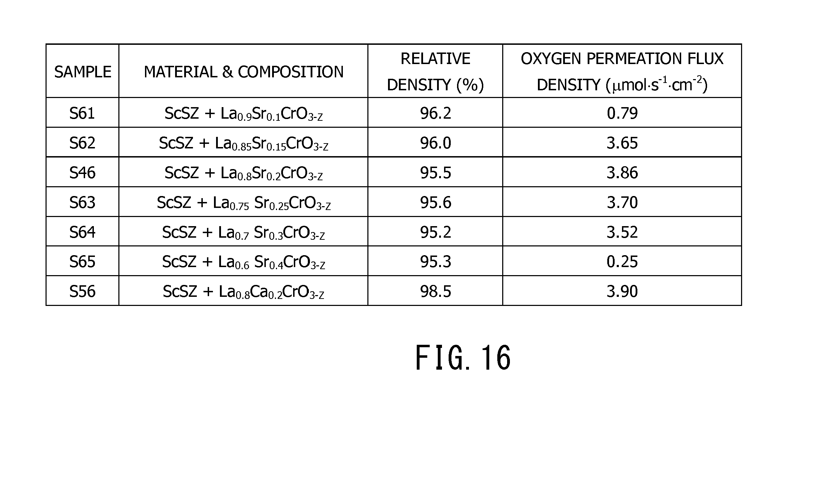

As shown in FIG. 13, sample S46 or S56, which was produced through the aforementioned firing process, was found to be a dense oxygen-permeable film having a relative density of 95% or more. Also, as shown in FIG. 16, comparison between samples S41 and S51, samples S42 and S52, samples S43 and S53, samples S44 and S54, samples S45 and S55, or samples S46 and S56 indicated that an oxygen-permeable film employing Ca as the alkaline earth metal M in the aforementioned formula (1) exhibited a relative density higher than that of an oxygen-permeable film employing Sr as the alkaline earth metal M when these oxygen-permeable films were produced under the same firing conditions.

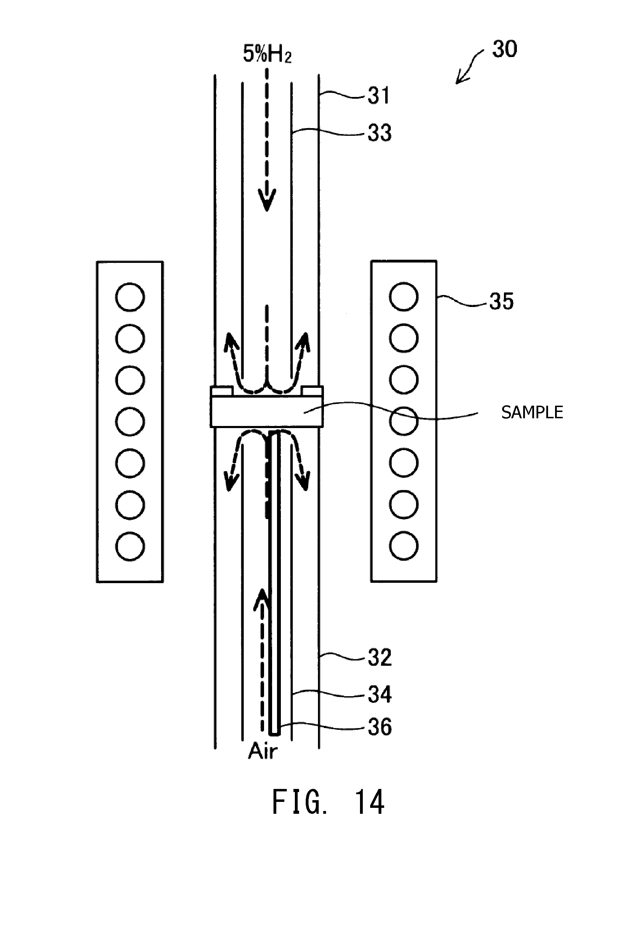

FIG. 14 schematically shows the configuration of a measuring apparatus 30 employed for determining the oxygen permeability of each oxygen-permeable film. For determination of oxygen permeability, each oxygen-permeable film produced through firing was further subjected to wet-polishing, to thereby adjust the thickness of the sample to 0.6 mm. The measuring apparatus 30 includes two transparent quartz tubes 31 and 32, alumina tubes 33 and 34, an electric furnace 35, and a thermocouple 36. The two transparent quartz tubes 31 and 32 are vertically provided, and each sample is sandwiched therebetween for determination of oxygen permeability. In order to bond the transparent quartz 31 to the sample, a gold thin-film ring (inner diameter: 10 mm) was placed on the sample, and the transparent quartz tube 31 was pressed onto the ring, followed by heating to 1050°C for softening of gold, to thereby secure gas sealability. The alumina tubes 33 and 34 were provided inside the transparent quartz tubes 31 and 32. For determination of oxygen permeability, a gas containing 5% hydrogen (balance gas: argon) was caused to flow through the alumina tube 33, and air was caused to flow through the alumina tube 34. The transparent quartz tubes 31 and 32 were provided in the electric furnace 35, and the sample sandwiched between the transparent quartz tubes 31 and 32 was placed at an evenly heated portion inside the electric furnace 35. In order to measure the temperature of the sample, the thermocouple 36 was provided in the alumina tube 34 so as to reach the vicinity of the sample. For determination of oxygen permeability, heating was carried out by means of the electric furnace 35 so that the temperature of the sample was maintained at 1,000°C.

In the measuring apparatus 30, when oxygen permeates through a sample from the air side (transparent quartz tube 32 side) to the 5% hydrogen-containing gas side (transparent quartz tube 31 side), water (water vapor) is generated on the oxygen-containing gas side. Conceivably, water vapor contained in the hydrogen-containing gas discharged from the measuring apparatus 30 is entirely derived from permeated oxygen. Therefore, the water vapor concentration of the discharged hydrogen-containing gas was measured by means of a mirror dew-point meter (product of Toyo Corporation) or a mass spectrometer (product of Bel Japan, Inc.), to thereby calculate the amount of permeated oxygen. The oxygen permeation flux density j ($O_2$) of the sample was determined on the basis of the thus-calculated amount of permeated oxygen and the permeation area of the sample. In this case, the amount of the 5% hydrogen-containing gas supplied through the alumina tube 33 or the amount of air supplied through the alumina tube 34 was adjusted to 300 mL/min by means of a mass flow controller.

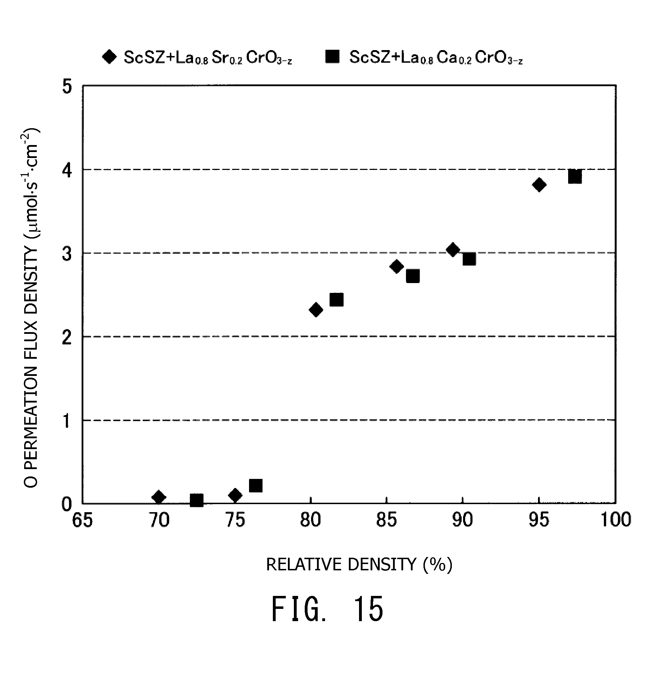

FIG. 15 is a graph obtained by plotting data on samples S41 to S52 shown in FIG. 13 (the horizontal axis corresponds to relative density, and the vertical axis corresponds to oxygen permeation flux density). As shown in FIGs. 13 and 15, an oxygen-permeable film having a relative density of 80% or more exhibited considerably improved oxygen permeability, as compared with an oxygen-permeable film having a relative density of less than 80%. It was also found that an oxygen-permeable film having a relative density of 90% or more exhibited further improved oxygen permeability, and an oxygen-permeable film having a relative density of 95% or more exhibited even further improved oxygen permeability.

E. Composition of electron conductor and oxygen permeation flux density:

FIG. 16 shows the results of a test for determining the relationship between the relative density and oxygen permeation flux density of a plurality of samples produced by employing ScSZ as an oxygen ion conductor and $La_{1-x}Sr_xCrO_{3-z}$ or $La_{1-x}Ca_xCrO_{3-z}$ as an electron conductor. Specifically, FIG. 16 shows the results of samples S61 to 65 produced by employing $La_{1-x}Sr_xCrO_{3-z}$ as an electron conductor and varying the value x (the amount of Sr substitution) in a range of 0.1 to 0.4, and also shows the aforementioned results of sample S46. FIG. 16 also shows the aforementioned results of sample 52 produced by employing $La_{0.8}Ca_{0.2}CrO_{3-z}$ as an electron conductor.

Samples S61 to S65 were produced in a manner similar to that of sample S46. However, for preparation of the electron conductor $La_{1-x}Sr_xCrO_{3-z}$, powdery raw materials were weighed so that the proportions of the metal elements corresponded to the compositional proportions of the formula of the intended electron conductor. The mixing proportion of $La_{1-x}Ca_xCrO_{3-z}$ was adjusted to 20 mol% in a mixture of ScSZ and $La_{1-x}Sr_xCrO_{3-z}$. For determination of the oxygen permeability of each sample, the sample (oxygen-permeable film) produced through firing was further subjected to wet-polishing, to thereby adjust the thickness of the sample to 0.6 mm. The relative density and oxygen permeation flux density of samples S61 to S65 were determined in the same manner as samples S41 to S52. As shown in FIG. 16, each of samples S61 to S65, which were produced through firing in the same manner as sample S46, was found to be a dense oxygen-permeable film having a relative density of 95% or more.

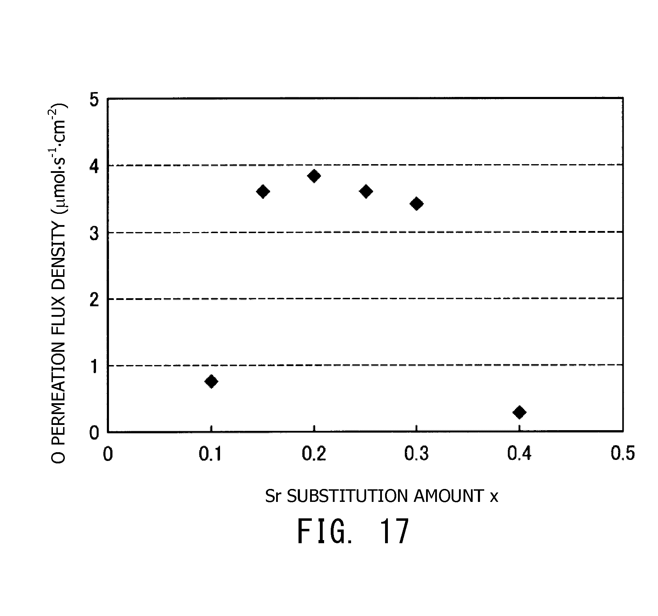

FIG. 17 is a graph obtained by plotting data on samples S61 to S65 and S46 shown in FIG. 16 (the horizontal axis corresponds to x in the compositional formula $La_{1-x}Sr_xCrO_{3-z}$ (the amount of Sr substitution), and the vertical axis corresponds to oxygen permeation flux density). As shown in FIGs. 16 and 17, a high oxygen permeation flux density was achieved when x was 0.15 to 0.3, a higher oxygen permeation flux density was achieved when x was 0.15 to 0.25, and the highest oxygen permeation flux density was achieved when x was 0.2.

The present invention is not limited to the above-described embodiment, examples, and modifications, and various modifications may be made without departing from the scope of the present invention. For example, the technical characteristics described in the embodiment, examples, and modifications corresponding to those of the modes described in the section "Summary of the Invention" may be appropriately replaced or combined in order to partially or completely solve the aforementioned problems, or to partially or completely achieve the aforementioned effects. Unless the technical characteristics are described as essential ones in the present specification, they may be appropriately omitted.

DESCRIPTION OF REFERENCE NUMERALS

| 10: | oxygen-permeable film |
|---|---|
| 16: | reforming raw material flow path |
| 18: | air flow path |
| 20: | reformer |
| 30: | measuring apparatus |
| 31, 32: | transparent quartz tube |
| 33, 34: | alumina tube |
| 35: | electric furnace |
| 36: | thermocouple |

## Claims

1. An oxygen-permeable film through which oxygen permeates from a high oxygen partial pressure side of the film to a low oxygen partial pressure side of the film by means of an oxygen partial pressure difference serving as a driving force, the oxygen-permeable film being **characterized by** comprising a mixture of:

    stabilized zirconia serving as an oxygen ion conductor; and
    an electron conductor represented by a compositional formula of $La_{1-x}M_xCrO_{3-z}$ (wherein M is an element selected from among alkaline earth metals other than magnesium (Mg), and x satisfies a relation of $0 \leq x \leq 0.3$).

2. An oxygen-permeable film according to claim 1, wherein, in the compositional formula, M is calcium (Ca) or strontium (Sr), and x satisfies a relation of $0.15 \leq x \leq 0.25$.

3. An oxygen-permeable film according to claim 2, wherein x is 0.2.

4. An oxygen-permeable film according to claim 2 or 3, wherein, in the compositional formula, M is calcium (Ca).

5. An oxygen-permeable film according to any one of claims 1 to 4, which generates substantially no heterogeneous phase after having been exposed to an atmosphere of 10% hydrogen and 90% nitrogen at 1,000°C for 24 hours.

6. An oxygen-permeable film according to any one of claims 1 to 5, which has a relative density of 80% or more.

7. An oxygen-permeable film according to claim 6, which has a relative density of 90% or more.

8. An oxygen-permeable film according to claim 1, wherein, in the compositional formula, x satisfies a relation of $0 \leq x \leq 0.2$.

9. An oxygen-permeable film according to any one of claims 1 to 8, which is produced through firing of a mixture of the oxygen ion conductor and the electron conductor.

FIG. 1

| SAMPLE | MATERIAL & COMPOSITION | FIRING TEMP. (°C) | HETEROGENEOUS PHASE GENERATION BY FIRING | REDUCTION RESISTANCE | SCORE |
|---|---|---|---|---|---|
| S01 | $YSZ + La_{0.8}Sr_{0.2}CrO_{3-z}$ | 1500 | — | NO REACTION | O |
| S02 | $YSZ + La_{0.9}Sr_{0.1}CrO_{3-z}$ | 1500 | — | NO REACTION | O |
| S03 | $YSZ + La_{0.85}Sr_{0.15}CrO_{3-z}$ | 1500 | — | NO REACTION | O |
| S04 | $ScSZ + La_{0.8}Sr_{0.2}CrO_{3-z}$ | 1500 | — | NO REACTION | O |
| S05 | $YSZ + La_{0.8}Ca_{0.2}CrO_{3-z}$ | 1500 | — | NO REACTION | O |
| S06 | $YSZ + La_{0.9}Ca_{0.1}CrO_{3-z}$ | 1500 | — | NO REACTION | O |
| S07 | $YSZ + La_{0.85}Ca_{0.15}CrO_{3-z}$ | 1500 | — | NO REACTION | O |
| S08 | $ScSZ + La_{0.8}Ca_{0.2}CrO_{3-z}$ | 1500 | — | NO REACTION | O |
| S09 | $YSZ + La_{0.6}Sr_{0.4}CrO_{3-z}$ | 1500 | HETEROGENEOUS PHASE | DECOMPN. | X |
| S10 | $YSZ + La_{0.6}Ca_{0.4}CrO_{3-z}$ | 1500 | HETEROGENEOUS PHASE | DECOMPN. | X |
| S11 | $YSZ + La_{0.6}Sr_{0.4}CoO_{3-z}$ | 1500 | HETEROGENEOUS PHASE | DECOMPN. | X |
| S12 | $YSZ + La_{0.6}Sr_{0.4}MnO_{3-z}$ | 1500 | HETEROGENEOUS PHASE | DECOMPN. | X |
| S13 | $YSZ + La_{0.8}Sr_{0.2}CoO_{3-z}$ | 1500 | HETEROGENEOUS PHASE | DECOMPN. | X |
| S14 | $YSZ + La_{0.8}Sr_{0.2}MnO_{3-z}$ | 1500 | HETEROGENEOUS PHASE | DECOMPN. | X |

FIG. 2

EP 2 893 972 A1

| SAMPLE | MATERIAL & COMPOSITION | FIRING TEMP. (°C) | HETEROGENEOUS PHASE GENERATION BY FIRING | REDUCTION RESISTANCE | SCORE |
|---|---|---|---|---|---|
| S21 | $YSZ + La_{0.8}Sr_{0.2}CrO_{3-z}$ | 1300 | — | NO REACTION | O |
| S22 | $YSZ + La_{0.9}Sr_{0.1}CrO_{3-z}$ | 1300 | — | NO REACTION | O |
| S23 | $YSZ + La_{0.85}Sr_{0.15}CrO_{3-z}$ | 1300 | — | NO REACTION | O |
| S24 | $ScSZ + La_{0.8}Sr_{0.2}CrO_{3-z}$ | 1300 | — | NO REACTION | O |
| S25 | $YSZ + La_{0.8}Ca_{0.2}CrO_{3-z}$ | 1300 | — | NO REACTION | O |
| S26 | $YSZ + La_{0.9}Ca_{0.1}CrO_{3-z}$ | 1300 | — | NO REACTION | O |
| S27 | $YSZ + La_{0.85}Ca_{0.15}CrO_{3-z}$ | 1300 | — | NO REACTION | O |
| S28 | $ScSZ + La_{0.8}Ca_{0.2}CrO_{3-z}$ | 1300 | — | NO REACTION | O |
| S29 | $YSZ + La_{0.6}Sr_{0.4}CrO_{3-z}$ | 1300 | HETEROGENEOUS PHASE | DECOMPN. | X |
| S30 | $YSZ + La_{0.6}Ca_{0.4}CrO_{3-z}$ | 1300 | HETEROGENEOUS PHASE | DECOMPN. | X |
| S31 | $YSZ + La_{0.6}Sr_{0.4}CoO_{3-z}$ | 1300 | HETEROGENEOUS PHASE | DECOMPN. | X |
| S32 | $YSZ + La_{0.6}Sr_{0.4}MnO_{3-z}$ | 1300 | HETEROGENEOUS PHASE | DECOMPN. | X |
| S33 | $YSZ + La_{0.8}Sr_{0.2}CoO_{3-z}$ | 1300 | HETEROGENEOUS PHASE | DECOMPN. | X |
| S34 | $YSZ + La_{0.8}Sr_{0.2}MnO_{3-z}$ | 1300 | HETEROGENEOUS PHASE | DECOMPN. | X |

FIG. 3

FIG. 4

SAMPLE S09: YSZ + La$_{0.6}$Sr$_{0.4}$CrO$_{3-z}$

○ YSZ
□ La$_{0.6}$Sr$_{0.4}$CrO$_{3-z}$
▽ SrZrO$_3$

Intensity(a.u.)

$2\theta$ /deg.

FIG. 5

SAMPLE S05: YSZ + La$_{0.8}$Ca$_{0.2}$CrO$_{3-z}$

○ YSZ
□ La$_{0.8}$Ca$_{0.2}$CrO$_{3-z}$

Intensity(a.u.)

$2\theta$ /deg.

FIG. 6

FIG. 7

FIG. 8

FIG. 9

FIG. 10

SAMPLE S01: YSZ＋$La_{0.8}Sr_{0.2}CrO_{3-z}$

FIG. 11

SAMPLE S31: YSZ＋$La_{0.6}Sr_{0.4}CoO_{3-z}$

FIG. 12

| SAMPLE | MATERIAL & COMPOSITION | RELATIVE DENSITY (%) | OXYGEN PERMEATION FLUX DENSITY ($\mu mol \cdot s^{-1} \cdot cm^{-2}$) |
|---|---|---|---|
| S41 | ScSZ + $La_{0.8}Sr_{0.2}CrO_{3-Z}$ | 69.8 | 0.063 |
| S42 | ScSZ + $La_{0.8}Sr_{0.2}CrO_{3-Z}$ | 75.1 | 0.092 |
| S43 | ScSZ + $La_{0.8}Sr_{0.2}CrO_{3-Z}$ | 80.4 | 2.33 |
| S44 | ScSZ + $La_{0.8}Sr_{0.2}CrO_{3-Z}$ | 85.8 | 2.85 |
| S45 | ScSZ + $La_{0.8}Sr_{0.2}CrO_{3-Z}$ | 89.5 | 3.02 |
| S46 | ScSZ + $La_{0.8}Sr_{0.2}CrO_{3-Z}$ | 95.5 | 3.86 |
| S51 | ScSZ + $La_{0.8}Ca_{0.2}CrO_{3-Z}$ | 72.8 | 0.040 |
| S52 | ScSZ + $La_{0.8}Ca_{0.2}CrO_{3-Z}$ | 76.1 | 0.25 |
| S53 | ScSZ + $La_{0.8}Ca_{0.2}CrO_{3-Z}$ | 81.5 | 2.45 |
| S54 | ScSZ + $La_{0.8}Ca_{0.2}CrO_{3-Z}$ | 86.6 | 2.73 |
| S55 | ScSZ + $La_{0.8}Ca_{0.2}CrO_{3-Z}$ | 90.2 | 2.91 |
| S56 | ScSZ + $La_{0.8}Ca_{0.2}CrO_{3-Z}$ | 98.5 | 3.90 |

# FIG. 13

FIG. 14

FIG. 15

| SAMPLE | MATERIAL & COMPOSITION | RELATIVE DENSITY (%) | OXYGEN PERMEATION FLUX DENSITY ($\mu mol \cdot s^{-1} \cdot cm^{-2}$) |
|---|---|---|---|
| S61 | $ScSZ + La_{0.9}Sr_{0.1}CrO_{3-z}$ | 96.2 | 0.79 |
| S62 | $ScSZ + La_{0.85}Sr_{0.15}CrO_{3-z}$ | 96.0 | 3.65 |
| S46 | $ScSZ + La_{0.8}Sr_{0.2}CrO_{3-z}$ | 95.5 | 3.86 |
| S63 | $ScSZ + La_{0.75}Sr_{0.25}CrO_{3-z}$ | 95.6 | 3.70 |
| S64 | $ScSZ + La_{0.7}Sr_{0.3}CrO_{3-z}$ | 95.2 | 3.52 |
| S65 | $ScSZ + La_{0.6}Sr_{0.4}CrO_{3-z}$ | 95.3 | 0.25 |
| S56 | $ScSZ + La_{0.8}Ca_{0.2}CrO_{3-z}$ | 98.5 | 3.90 |

FIG. 16

FIG. 17

| **INTERNATIONAL SEARCH REPORT** | International application No. |
|---|---|
| | PCT/JP2013/005212 |

A. CLASSIFICATION OF SUBJECT MATTER
*B01D71/02*(2006.01)i, *C01B13/02*(2006.01)i, *C01G37/14*(2006.01)i, *H01M8/06* (2006.01)n

According to International Patent Classification (IPC) or to both national classification and IPC

B. FIELDS SEARCHED

Minimum documentation searched (classification system followed by classification symbols)
B01D71/02, C01B13/02, C01G37/14, H01M8/06

Documentation searched other than minimum documentation to the extent that such documents are included in the fields searched

| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-62258 A (TDK Corp.), 26 March 2009 (26.03.2009), claims 1 to 7 (Family: none) | 1-9 |
| A | JP 2009-509751 A (Trustees of Boston University), 12 March 2009 (12.03.2009), claims 1 to 35 & US 2010/0015014 A1 & EP 1954379 A & WO 2007/086949 A2 | 1-9 |
| A | JP 2008-296162 A (Japan Science and Technology Agency), 11 December 2008 (11.12.2008), claims 1 to 3 (Family: none) | 1-9 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 October, 2013 (23.10.13) | 05 November, 2013 (05.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/005212

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-62188 A  (Noritake Co., Ltd.),<br>21 March 2008 (21.03.2008),<br>claims 1 to 4<br>(Family: none) | 1-9 |
| A | JP 2005-95718 A  (Noritake Co., Ltd.),<br>14 April 2005 (14.04.2005),<br>claims 1 to 14<br>(Family: none) | 1-9 |
| A | JP 2004-284947 A  (Air Products and Chemicals, Inc.),<br>14 October 2004 (14.10.2004),<br>claims 27 to 39<br>& US 2004/0182306 A1    & EP 1466693 A2<br>& EP 1466694 A2 | 1-9 |
| A | JP 2003-210952 A  (Taiheiyo Cement Corp.),<br>29 July 2003 (29.07.2003),<br>claims 1 to 6<br>(Family: none) | 1-9 |
| A | JP 2004-535544 A  (Advanced Technology Materials, Inc.),<br>25 November 2004 (25.11.2004),<br>claims 1 to 26<br>& US 2002/0170429 A1    & EP 1370340 A<br>& WO 2002/074420 A1 | 1-9 |
| A | JP 4-292904 A  (Yuasa Battery Co., Ltd.),<br>16 October 1992 (16.10.1992),<br>claims 1 to 3<br>(Family: none) | 1-9 |
| A | JP 2001-93325 A  (Tatsumi ISHIHARA),<br>06 April 2001 (06.04.2001),<br>claims 1, 2<br>(Family: none) | 1-9 |

Form PCT/ISA/210 (continuation of second sheet) (July 2009)

**EP 2 893 972 A1**

REFERENCES CITED IN THE DESCRIPTION

**Patent documents cited in the description**

- JP 2012195247 A
- JP 2005281086 A
- JP H05238738 B